# NEUE EUROPÄISCHE PATENTSCHRIFT

(11) **EP 0 704 488 B2**
(45) Veröffentlichungstag und Bekanntmachung des Hinweises auf die Entscheidung über den Einspruch: **10.02.2010**
(45) Hinweis auf die Patenterteilung: 01.06.2005
(21) Anmeldenummer: 95114685.1
(22) Anmeldetag: 19.09.1995
(51) Int. Cl.: C08L 69/00, C08L 51/04, C08L 25/02

(54) **Polycarbonat-Formmassen mit verbesserter Zähigkeit**
Polycarbonate moulding compositions with improved toughness
Compositions à mouler à base de polycarbonate ayant une ténacité améliorée

(30) Priorität: 30.09.1994 DE 4434965
(43) Veröffentlichungstag der Anmeldung: 03.04.1996
(73) Patentinhaber: Bayer MaterialScience AG, 51368 Leverkusen (DE)
(72) Erfinder: Wittmann, Dieter, Dr., D-51375 Leverkusen (DE); Eckel, Thomas, Dr., D-41540 Dormagen (DE); Alberts, Heinrich, Dr., D-51519 Odenthal (DE); Eichenauer, Herbert, Dr., D-41539 Dormagen (DE); Jansen, Ulrich, Dr., D-41541 Dormagen (DE)

(56) Entgegenhaltungen:
- EP-A- 0 062 838
- EP-A- 0 111 260
- EP-A- 0 260 559
- EP-A- 0 265 907
- EP-A- 0 356 979
- EP-A- 0 452 788
- EP-A- 0 606 558
- US-A- 3 988 389
- US-A- 4 879 329
- US-A- 4 937 285

## Beschreibung

Die Erfindung betrifft Polycarbonat-Formmassen, die bestimmte Pfropfpolymerisate, insbesondere ABS-Polymerisate, und vinylaromatische Copolymere enthalten.

Die Modifizierung von Polycarbonaten mit gepfropften Kautschuken zur Verbesserung der Kältezähigkeit ist seit langem bekannt. In der Praxis wird häufig SAN-gepfropftes Polybutadien (ABS) verwendet (s. hierzu als Übersichtsartikel Kunststoff-Handbuch Band 3/2: Technische Polymer-Blends, S. 149 ff).

Unterhalb der sogenannten kritischen Temperatur von Polycarbonat bei etwa +10 °C (dem "Zäh-Spröd-Übergang", s. Encyclopedia of Polymer Sciene and Engineering, Vol. 11, Second Edition, 1988 by John Wiley & Sons, S. 659) muß Schlagzähmodifikator zugesetzt werden, wenn Sprödbuch vermieden werden soll.

Da der Schlagzähmodifikator (z.B. ABS-Pfropfpolymerisat) einen Anteil an hochvernetzter, teilchenförmiger Elastomerkomponente mit einer Glastemperatur < 0 °C enthält, reduziert sich mit zunehmendem Gehalt an ABS-Pfropfpolymerisat die Steifigkeit und das Fließverhalten der PC/ABS-Formmassen. Ziel der durchgeführten Untersuchungen war es, einen Elastomermodifikator für Polycarbonat-Formmassen zu entwickeln, der eine höhere Effizienz als bekannte Systeme aufweist.

Aus EP-A 606 558 sind Formmassen mit verbesserten Eigenschaften aus Polycarbonat (ggf. in Mischung mit Polyalkylenterephthalat), Pfropfpolymerisat und gegebenenfalls einem Copolymerisat (dessen Menge maximal 15 Gew.-% beträgt) bekannt. Die Kautschukgrundlage des Pfropfpolymerisats, gemäß EP-A 606 558 soll eine enge Teilchengrößenverteilung (> 50 % zwischen 200 und 300 nm) aufweisen.

Es wurde nun gefunden, daß bestimmte Pfropfpolymerisate, deren Teilchengröße und Pfropfgrad innerhalb enger Grenzen liegen, in synergistischer Weise die Kältezähigkeit von PC/ABS-Formmassen verbessern. Bei Verwendung der erfindungsgemäßen Pfropfpolymerisate verbessert sich sogar völlig unerwartet mit abnehmendem Gesamtkautschukgehalt in den Formmassen die Kältezähigkeit, so daß insgesamt höhere Steifigkeit/verbessertes Fließverhalten bei höherer Kältezähigkeit erreichbar sind. Die erfindungsgemäßen Formmassen weisen auch nicht den üblichen deutlichen Abfall der Zähigkeitswerte von Raumtemperatur nach tiefen Temperaturen (-20 °C, -40 °C) auf und übertreffen in Kältezähigkeit und Steifigkeit vergleichbare Einstellungen der EP-A 606 558 deutlich.

Gegenstand der Erfindung sind Formmassen bestehend aus
A. 30 bis 70 Gew.-Teile thermoplastisches Polycarbonat auf Basis von Bisphenol-A und
B. 10 bis 30 Gew.-Teile Pfropfpolymerisat von
   B.1 20 bis 60 Gew.-% einem oder mehreren Monomeren auf
   B.2 40 bis 80 Gew.-% einer oder mehrerer Pfropfgrundlagen mit Glasübergangstemperaturen < 0°C, vorzugsweise < -20 °C,
C. 20 bis 35 Gew.-Teile thermoplastisches Vinylaromat(co)polymerisat, und
   gegebenenfalls mindestens eine Komponente ausgewählt aus der Gruppe bestehend aus Stabilisatoren, Pigmente, Entformungsmittel, Fließhilfsmittel, Flammschutzmittel, Antitropfmittel und Antistatika,
**dadurch gekennzeichnet, daß** die Pfropfgrundlage B.2 eine mittlere Teilchengröße (d₅₀-Wert) von 0,20 bis 0,35 µm, vorzugsweise 0,25 bis 0,30 µm aufweist und das Gew.-Verhältnis der Komponenten B:C zwischen 2:1 und 1:4, vorzugsweise zwischen 1:1 und 1:3 liegt.

### Komponente A

Aromatische Polycarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenol zur Herstellung der aromatischen Polycarbonate ist 2,2-Bis-(4-hydroxyphenyl)-propan (Bisphenol-A).

Das Diphenol sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenöl bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M̅_{w}, gemessen z.B. durch Ultrazentrifugation oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen Gruppen.

Geeignet sind sowohl Homopolycarbonate als auch Copolycarbonate. Zur Herstellung erfindungsgemäßer Copolycarbonate A) können auch 1 bis 25 Gew.-%, vorzugsweise 2,5 bis 25 Gew.-% (bezogen auf die Gesamtmenge an einzusetzenden Diphenolen), Diphenole der Formel (III) verwendet werden, 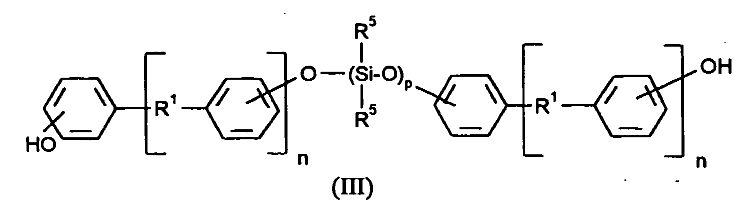 worin
- R¹: die für Formel (I) genannte Bedeutung hat,
- n: 1 oder null ist,
- R⁵: gleich oder verschieden ist und ein lineares C₁-C₂₀-Alkyl, verzweigtes C₃- C₂₀-Alkyl oder C₆-C₂₀-Aryl, vorzugsweise CH₃, ist und
- p: eine ganze Zahl zwischen 5 und 100, vorzugsweise zwischen 20 und 80 ist.

Polydiorganosiloxane mit Hydroxy-aryloxy-Endgruppen gemäß Formel (III) sind bekannt (s. beispielsweise US-Patent 3 419 634) bzw. nach literaturbekannten Verfahren herstellbar. Die Herstellung Polydiorganosiloxan-haltiger Copolycarbonate wird z.B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, an den anderen der bevorzugt bzw. besonders bevorzugt genannten Diphenole, insbesondere an 2,2-Bis(3,5-dibrom-4-hydroxyphenyl)-propan.

Aromatische Dicarbonsäuredihalogenide zur Herstellung der thermoplastischen, aromatischen Polyestercarbonate sind vorzugsweise die Disäuredichloride der Isopthalsäure, Terepthalsäure, Diphenylether-4,4'-dicarbonsäure und der Naphthalin-2,6-dicarbonsäure.

Besonders bevorzugt sind Gemische der Disäuredichloride der Isopthalsäure und der Terepthalsäure im Verhältnis zwischen 1:20 und 20: 1.

Die thermoplastischen, aromatischen Polycarbonate können allein oder im beliebigen Gemisch untereinander eingesetzt werden.

### Komponente B

Die Komponente B umfaßt ein oder mehrere Pfropfcopolymerisate von
B.1 20 bis 60 Gew.-Teilen eines oder mehrerer Monomeren auf
B.2 40 bis 80 Gew.-Teile einer oder mehrerer Pfropfgrundlagen mit Glasübergangstemperaturen < 0 °C, vorzugsweise < -20 °C, **dadurch gekennzeichnet, daß** die Pfropfgrundlagen B.2 mittlere Teilchengrößen (d₅₀-Wert) von 0,20 bis 0,35 µm, vorzugsweise 0,25 bis 0,30 µm aufweisen.

### Monomere B.1 sind Gemische aus

B.1.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₄)-Alkylester (wie zum Beispiel Methylmethacrylat, Ethylmethacrylat) und
B.1.2 bis 50 Gew.-Teilen Vinylcyanide (ungesättigte Nitrile wie Acrylnitril und Methacrylnitril) und/oder (Meth)-Acrylsäure-(C₁-C₈)-Alkylester (wie zum Beispiel Methylmethacrylat, n-Butyl-acrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind Styrol, α-Methylstyrol und Methylmethacrylat, bevorzugte Monomere B.1.2 sind Acrylnitril, Maleinsäureanhydrid und Methylmethacrylat.

Besonders bevorzugte Monomere sind B.1.1 Styrol und B.1.2 Acrylnitril..

Für die Pfropfpolymerisate B. geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke.

Bevorzugte Pfropfgrundlagen B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B.2 unterhalb 0 °C liegt.

Besonders bevorzugt wird reiner Polybutadienkautschuk.

Besonders bevorzugte Polymerisate B. sind z.B. ABS-Polymerisate (Emulsions-, Masse- und Suspensions-ABS), wie sie z.B. in der DE-OS 2 035 390 (= US-PS 3 644 574) oder in der DE-OS 2 248 242 (= GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen), der mittlere Teilchendurchmesser d₅₀ der Pfropfgrundlage B.2 0,20 bis 0,35 µm, vorzugsweise 0,25 bis 0,30 µm. Pfropfcopolymerisate, deren Kautschukgrundlage einen kleineren oder größeren mittleren Teilchendurchmesser d₅₀ aufweisen, ergeben in bezug auf die erfindungsgemäßen Eigenschaften weniger günstige Formmassen.

Die Pfropfcopolymerisate B. werden durch radikalische Polymerisation, z.B. durch Emulsions-, Suspensions-, Lösungs- oder Massepolymerisation, vorzugsweise durch Emulsionspolymerisation hergestellt.

Besonders geeignete Pfropfkautschuke sind ABS-Polymerisate, die durch Redox-Initiierung mit einem Initiatorsystem aus organischen Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B. auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B. sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Anteil der Komponente B in den Formmassen soll zwischen 4 und 40 Gew.-Teilen, vorzugsweise zwischen 10 und 30 Gew.-Teilen betragen. Mit weniger als 4 Gew.-Teilen ist die Schlagzähmodifizierung der Formmassen nicht mehr ausreichend, während mit mehr als 40 Gew.-Teilen die erfindungsgemäßen Vorteile im Hinblick auf Verarbeitbarkeit und Steifigkeit verloren gehen.

Der Gelgehalt der Pfropfgrundlage B.2 wird bei 25 °C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

### Komponente C

Die Komponente C umfaßt ein oder mehrere thermoplastische Vinylaromat(co)polymerisate.

Geeignet sind (Co)Polymerisate C. von mindestens einem Monomeren aus der Gruppe der Vinylaromaten, Vinylcyanide (ungesättigte Nitrile), (Meth)Acrylsäure-(C₁-C₈)-Ester, ungesättigte Carbonsäuren sowie Derivate (wie Anhydride und Imide) ungesättigter Carbonsäuren. Insbesondere geeignet sind (Co)Polymerisate aus
C.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₄)-Alkylester (wie zum Beispiel Methylmethacrylat, Ethylmethacrylat), und
C.2 1 bis 50 Gew.-Teilen Vinylcyanide (ungesättigte Nitrile wie Acrylnitril und Methacrylnitril und/oder (Meth)Acrylsäure-(C₁-C₄)-Alkylester (wie zum Beispiel Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C. sind harzartig, thermoplastisch und kautschukfrei.

Besonders bevorzugt ist das Copolymerisat aus C.1 Styrol und C.2 Acrylnitril.

Die (Co)Polymerisate gemäß C. sind bekannt und lassen sich durch radikalische Polymerisation, insbesondere durch Emulsions-, Suspensions-, Lösungs- oder Massepolymerisation herstellen. Die (Co)Polymerisate gemäß Komponente C. besitzen vorzugsweise Molekulargewichte M̅_{w} (Gewichtsmittel, ermittelt durch Lichtstreuung oder Sedimentation) zwischen 15 000 und 200 000.

(Co)polymerisate gemäß Komponente C. entstehen häufig bei der Pfropfpolymerisation der Komponente B. als Nebenprodukte, besonders dann, wenn große Mengen Monomere B.1 auf kleine Mengen Kautschuk B.2 gepfropft werden.

Die erfindungsgemäß einzusetzende Menge an C von 16 bis 45 Gew.-Teilen bezieht diese Nebenprodukte der Pfropfpolymerisation von B. nicht ein.

Höhere Gehalte als 45 Gew.-Teile an zugesetzter Menge Copolymerisat C sind wegen der dann nicht mehr ausreichender Kältezähigkeit nicht erwünscht, bei weniger als 16 Gew.-Teilen ist die günstige Kombination aus Steifigkeit und Verarbeitbarkeit nicht zu erzielen.

Das Gew.-Verhältnis der Komponenten B:C soll zwischen 2:1 und 1:4 (vorzugsweise zwischen 1:1 und 1:3) liegen. Höhere Verhältnisse B:C als 2:1 führen zu nicht ausreichendem Fließverhalten und verringerter Steifigkeit, während niedrigere Verhältnisse B:C als 1:4 eine unbefriedigende Kältezähigkeit aufweisen.

Die erfindungsgemäßen Formmassen können darüber hinaus weitere bekannte Zusätze des Stands der Technik in den üblichen bzw. notwendigen Mengen enthalten. Ohne Anspruch auf Vollständigkeit seien hier genannt Stabilisatoren (z.B. sterisch gehinderte Phosphite der US-P 4 381 359 und sterisch gehinderte Phenole), übliche Pigmente (Ruß, Metalloxide etc.), Entformungsmittel (z.B. Pentaerithrittetrastearat), Fließhilfsmittel (wie oligomere Polycarbonate gemäß A mit Molekulargewichten zwischen 500 und 10 000), Flammschutzmittel (z.B. die organischen Phosphate der EP 0 345 522 und EP 0 363 608), Antitropfmittel (z.B. Tetrafluorethylenpolymerisate, Polyphenylenoxid) und Antistatika (z.B. Basis Polyalkylenether gemäß US-P 4 883 835 und 4 920 166 sowie Alkalisalze von Alkansulfonsäuren).

Die erfindungsgemäßen Formmassen können hergestellt werden, indem man die Bestandteile in bekannter Weise vermischt und bei erhöhten Temperaturen, vorzugsweise bei 200 bis 350 °C, in üblichen Vorrichtungen wie Innenknetern, Extrudern oder Doppelwellenschnecken schmelzcompoundiert oder schmelzextrudiert. Die erfindungsgemäßen Formmassen können zur Herstellung von Formkörpern jeder Art, z.B. durch Spritzgießen oder Extrusionsblasen, verwendet werden. Beispiele für Formkörper sind: Gehäuseteile (z.B. für Haushaltsgeräte wie Saftpressen, Kaffeemaschinen, Mixer), Abdeckplatten für das Baugewerbe und insbesondere Automobilteile. Sie werden außerdem für elektrische Geräte, z.B. für Steckerleisten eingesetzt, weil sie sehr gute elektrische Eigenschaften haben.

Formkörper können auch durch Tiefziehen aus vorher hergestellten Platten oder Folien hergestellt werden.

Ein weiterer Gegenstand der Erfindung ist also die Verwendung der beschriebenen Formmassen zur Herstellung von Formkörpern.

### Beispiele

### 1. Eingesetzte Komponenten

Angegebene Teile bedeuten Gewichtsteile.

### Komponente A

Lineares Polycarbonat auf Basis Bisphenol-A mit einer relativen Lösungsviskosität ηᵣₑₗ = 1,28, gemessen in Methylenchlorid bei 25 °C und in einer Konzentration von 0,5 g/100 ml.

### Komponente B

Die Herstellung der Pfropfpolymerisate B erfolgte durch Emulsionpolymerisation der Pfropfmonomere (in allen Fällen ein Gemisch von Styrol/Acrylnitril im Gew.-Verhältnis von 73:27) in Gegenwart einer Emulsion der Polybutadiengrundlage (die nach üblichem Verfahren hergestellt wurde) mit einem Redox-Aktivatorsystem aus Cumolhydroperoxid und Ascorbinsäure (Herstellung analog zu Beispiel B.I der DE-OS 3 738 143) und Nachaktivierung mit Kaliumpersulfat. Die Zusammensetzung und Charakterisierung ergibt sich aus Tabelle 1.

**Tabelle 1**

| Zusammensetzung der Pfropfpolymerisate B (B.I bis B.VI) | | | |
|---|---|---|---|
| Pfropfpolymerisat (B) | Pfropfgrundlage (B.2) | | Pfropfauflage (B.1) |
| | [Gew.-Teile] | d₅₀-Wert | [Gew.-Teile] |
| B.I (Vergleich) | 60 | 0,10 | 40 |
| B.II (Vergleich) | 60 | 0,40 | 40 |
| B.III (erfindungsgemäß) | 60 | 0,28 | 40 |
| B.IV (Vergleich) | 70 | 0,10 | 30 |
| B.V (Vergleich) | 70 | 0,40 | 30 |
| B.VI (erfindungsgemäß) | 70 | 0,28 | 30 |

### Komponente C

Styrol/Acrylnitril-Copolymerisat mit einem Styrol/Acrylnitril-Gewichts-Verhältnis von 72:28 und einer Grenzviskosität von [η] = 0,55 dl/g (Messung in Dimethylformamid bei 20 °C).

### 2. Herstellung und Prüfung der erfindungsgemäßen Formmassen

Die Komponenten A, B und C wurden auf einem 3,5 l Innenkneter bei Temperaturen zwischen 210 und 250 °C aufgeschmolzen und homogenisiert.

Am so hergestellten Granulat der Formmassen wurde die Viskositätsfunktion bei 260 °C (Schmelzviskosität in Abhängigkeit von der Schergeschwindigkeit im Bereich von ca. 20 s⁻¹ bis 10 000 s⁻¹) aufgenommen. Als für die Spritzgießverarbeitung relevante Größe wurde der Viskositäts-Wert für 1 000 s⁻¹ angegeben.

Je kleiner der η-Wert (Pa·s), umso besser ist das Fließverhalten.

Von den Formmassen wurden auf einer Spritzgußmaschine Stäbe der Abmessung 80x10x4 mm³ (Verarbeitungstemperatur 260 °C) hergestellt, an denen die Kerbschlagzähigkeit bei Raumtemperatur, bei -20 °C und -40 °C (nur wenn bei -20 °C noch zähes Bruchverhalten) nach Methode ISO 180 1A gemessen wurde.

An den oben genannten Prüfstäben wurde der Biege-E-Modul nach DIN 53 452 bestimmt.

Die Zusammensetzung und Eigenschaften der Formmassen (Beispiele 1 bis 12) finden sich in der nachfolgenden Tabelle 2.

**Tabelle 2**

| Eigenschaften der Formmassen | | | | | | | | |
|---|---|---|---|---|---|---|---|---|
| (Alle Einstellungen enthalten 60 Gew.-Teile Polycarbonat A) | | | | | | | | |
| Blend Beispiel | Pfropfpolymerisat B | | Copolymerisat C | Kerbschlagzähigkeit ISO 180 1A [kJ/m²] | | | Fließverhalten bei 1 000 s⁻¹ | Biege-E-Modul DIN 53 452 |
| | Typ | [Gew.-Teile] | [Gew.-Teile] | R.T. | -20 °C | -40 °C | [Pa x s] | [MPa] |
| 1 (Vergleich) | B.I | 18,3 | 21,7 | 51z | 40z | 36z/s | 307 | 2 100 |
| 2 (Vergleich) | B.II | 18,3 | 21,7 | 53z | 42z | 31z/s | 259 | 2 150 |
| 3 | B.III | 18,3 | 21,7 | 49z | 49z | 50z | 253 | 2 170 |
| 4 (Vergleich) | B.IV | 15,7 | 24,3 | 50z | 40z | 21s | 276 | 2 090 |
| 5 (Vergleich) | B.V | 15,7 | 24,3 | 57z | 45z | 29z/s | 252 | 2 150 |
| 6 | B.VI | 15,7 | 24,3 | 65z | 67z | 61z | 240 | 2 180 |
| 7 (Vergleich) | B.I | 12,3 | 27,7 | 57z | 42z | 19s | 234 | 2 330 |
| 8 (Vergleich) | B.II | 12,3 | 27,7 | 61z | 26z/s | 16s | 218 | 2 390 |
| 9 | B.III | 12,3 | 27,7 | 50z | 50z | 19s | 204 | 2 400 |
| 10 (Vergleich) | B.IV | 11,7 | 28,3 | 69z | 40z/s | 18s | 232 | 2 310 |
| 11 (Vergleich) | B.V | 11,7 | 28,3 | 108z | 15s | -- | 222 | 2 330 |
| 12 | B.VI | 11,7 | 28,3 | 64z | 72z | 21s | 214 | 2 360 |

| | | | | | | | | |
|---|---|---|---|---|---|---|---|---|
| Bruchverhalten z: zäh s: spröd z/s: zäh/spröd (Übergangsbereich) | | | | | | | | |

In Tabelle 2 sind die Beispiele/Vergleichsbeispiele jeweils in Dreiergruppen mit gleichem Pfropfpolymerisattyp (Kautschukgehalt), aber unterschiedlichem mittleren Teilchendurchmesser der Pfropfgrundlage zusammengefaßt. Die Formmassen der Beispiele 1 bis 6 enthalten jeweils 11 Gew.-% Pfropfgrundlage B.2.

Wie zu erkennen ist, sind die Formmassen von Beispiel 3 (Basis Pfropfgrundlage B.2 mit d₅₀-Wert im erfindungsgemäßen Bereich) den Vergleichsbeispielen 1 (d₅₀-Wert unterhalb) und 2 (d₅₀-Wert oberhalb) in Kältezähigkeit, Fließverhalten und Steifigkeit überlegen, das gleiche gilt für Beispiel 6 verglichen mit den Vergleichsbeispielen 4 und 5. Während die erfindungsgemäßen Beispiele 3 und 6 das Zähigkeitsniveau bis -40 °C erhalten, fallen die Werte der Vergleichsbeispiele 1, 2 und 4, 5 bereits bei -20 °C deutlich ab. Die Formmassen der Beispielserie 7 bis 9 enthalten 7,4 Gew.-% Pfropfgrundlage B.2, die der Beispielserie 10 bis 12 jeweils 8,2 Gew.-%. Auch bei diesen kautschukärmeren Einstellungen sind die erfindungsgemäßen Beispiele 9 (bzw. 12) in Kältezähigkeit, Fließverhalten und Steifigkeit den Vergleichsbeispielen 7 und 8 (bzw. 10 und 11) überlegen. Betrachtet man die beiden erfindungsgemäßen Beispiele 6 und 12 auf Basis der unterschiedlichen Mengen des gleichen Pfropfpolymerisats, so sieht man, daß trotz abnehmendem Gesamtkautschukgehalt (von 11 auf 8,2 Gew.-% in den Formmassen) der Zähigkeitswert bei -20 °C beim kautschukärmeren Beispiel 12 höher liegt als beim Beispiel 6. Bei den Vergleichsbeispielen findet man hingegen das übliche Verhalten: bei abnehmendem Kautschukgehalt in den Formmassen fällt entweder das Kältezähigkeitsniveau bei -20 °C deutlich ab (Beispiel 5 und 11), oder es treten Sprödbrüche auf, die den Gebrauchswert der Formmassen mindern (Beispiel 4 und 10).

## Patentansprüche

1. Thermoplastische Formmassen bestehend aus
A. 30 bis 70 Gew.-Teile thermoplastisches Polycarbonat auf Basis von Bisphenol-A und
B. 10 bis 30 Gew.-Teile Pfropfpolymerisat von
B.1 20 bis 60 Gew.-% einem oder mehreren Monomeren bestehend aus
B.1.1 50 bis 99 Gew.-Teilen Vinylaromaten und/oder kernsubstituierten Vinylaromaten und/oder Methacrylsäure-(C₁-C₄)-Alkylester und
B.1.2 1 bis 50 Gew.-Teilen Vinylcyanide, Methacrylsäure-(C₁-C₈)-Alkylester, Maleinsäure, Maleinsäureanhydrid, N-Phenyl-Maleinimid oder Mischungen hieraus,
auf
B.2 40 bis 80 Gew.% einer Pfropfgrundlage ausgewählt aus der Gruppe der EP(D)M-, Polyurethan-, Ethylen/Vinylacetat- und einer Polybutadienkautschuk mit Glasübergangstemperaturen < 0 °C,
C. 20 bis 35 Gew.-Teile thermoplastisches Vinylaromat(co)polymerisat, und
gegebenfalls mindestens eine Komponente ausgewählt aus der Gruppe bestehend aus Stabilisatoren, Pigmente, Entformungsmittel, Fließhilfsmittel, Flammschutzmittel, Antitropfmittel und Antistatika,
**dadurch gekennzeichnet, daß** die Pfropfgrundlage B.2 eine mittlere Teilchengröße (d₅₀-Wert) von 0,20 bis 0,35 µm aufweist und das Gew.-Verhältnis der Komponenten B:C zwischen 2:1 und 1:4 liegt.

2. Thermoplastische Formmassen gemäß Anspruch 1, **dadurch gekennzeichnet, daß** die Glasübergangstemperatur der Komponente B.2 < -20 °C ist und der mittlere Teilchendurchmesser d₅₀ 0,25 bis 0,30 µm beträgt.

3. Thermoplastische Formmassen gemäß Anspruch 1, **dadurch gekennzeichnet, daß** das Gew.-Verhältnis der Komponente B:C zwischen 1:1 und 1:3 liegt.

4. Thermoplastische Formmassen gemäß Anspruch 1, **dadurch gekennzeichnet, daß** Komponente B ein kautschukmodifiziertes Polymerisat ist, hergestellt durch Pfropfcopolymerisation von Monomerengemischen aus
B.1.1 50 bis 99 Gew.-Teilen Styrol, α-Methylstyrol, p-Methylstyrol, p-Chlorstyrol, Methylmethacrylat, Ethylmethacrylat oder Mischungen hieraus und
B.1.2 1 bis 50 Gew.-Teilen Acrylnitril, Methacrylnitril, Methylmethacrylat, Maleinsäure, Maleinsäureanhydrid, N-Phenyl-Maleinimid oder Mischungen hieraus.
in Gegenwart einer Pfropfgrundlage B.2.

5. Thermoplastische Formmassen gemäß Anspruch 1 bis 4, wobei B.1.1 ausgewählt ist aus Styrol, α-Methylstyrol und Methylmethacrylat und B.1.2 ausgewählt ist aus Acrylnitril, Maleinsäureanhydrid und Methylmethacrylat.

6. Thermoplastische Formmassen gemäß Anspruch 1 bis 5, **dadurch gekennzeichnet, daß** Komponente C ein (Co)polymerisat ist, hergestellt aus
C.1 50 bis 99 Gew.-Teilen Vinylaromaten und/oder kernsubstituierten Vinylaromaten und/oder Methacrylsäure-(C₁-C₄)-Alkylester und
C.2 1 bis 50 Gew.-Teilen Vinylcyanide und/oder (Meth)Acrylsäure-(C₁-C₈)-Alkylester und/oder ungesättigte Carbonsäuren und/oder Derivate ungesättigter Carbonsäuren.

7. Thermoplastische Formmassen gemäß Anspruch 1 bis 6, **dadurch gekennzeichnet, daß** C.1 Styrol und C.2 Acrylnitril und B.1.1 Styrol und B.1.2 Acrylnitril sind.

8. Thermoplastische Formmassen gemäß Anspruch 1 bis 7, **dadurch gekennzeichnet, daß** die Komponente B.2 ein Polybutadienkautschuk ist.

9. Thermoplastische Formmassen gemäß Anspruch 1 bis 8, **dadurch gekennzeichnet, daß** sie mindestens einen Zusatz aus der Gruppe der Stabilisatoren, Pigmente, Entformungsmittel, Fließhilfsmittel, Flammschutzmittel und Antistatika enthalten.

10. Verwendung der Formmassen gemäß Anspruch 1 bis 9 zur Herstellung von Formkörpern.

11. Formkörper, erhältlich aus Formmassen nach einem oder mehreren der vorhergehenden Ansprüche.

## Claims

1. Thermoplastic moulding compositions comprising
A. 30 to 70 parts by wt. of thermoplastic polycarbonate based on bisphenol A and
B. 10 to 30 parts by wt. of graft polymer of
B.1 20 to 60 wt.% of one or more monomers comprising
B.1.1 50 to 99 parts by wt. of vinylaromatics and/or vinylaromatics substituted on the nucleus and/or methacrylic acid (C₁-C₄)-alkyl esters and
B.1.2 1 to 50 parts by wt. of vinyl cyanides, methacrylic acid (C₁-C₈)-alkyl esters, maleic acid, maleic anhydride, N-phenyl-maleimide or mixtures thereof
on
B.2 40 to 80 wt.% of a graft base chosen from the group of EP(D)M rubber, polyurethane rubber, ethylene/vinyl acetate rubber and a polybutadiene rubber with glass transition temperatures of < 0 °C,
C. 20 to 35 parts by wt. of thermoplastic vinylaromatic (co)polymer, and
optionally at least one component chosen from the group consisting of stabilizers, pigments, mould release agents, flow auxiliaries, flameproofing agents, anti-dripping agents and antistatics,
**characterized in that** the graft base B.2 has an average particle size (d₅₀ value) of from 0.20 to 0.35 µm and the wt. ratio of components B:C is between 2:1 and 1:4.

2. Thermoplastic moulding compositions according to claim 1, **characterized in that** the glass transition temperature of component B.2 is < -20 °C and the average particle diameter d₅₀ is 0.25 to 0.30 µm.

3. Thermoplastic moulding compositions according to claim 1, **characterized in that** the wt. ratio of components B:C is between 1:1 and 1:3.

4. Thermoplastic moulding compositions according to claim 1, **characterized in that** component B is a rubber-modified polymer prepared by grafting copolymerization of monomer mixtures of
B.1.1 50 to 99 parts by wt. of styrene, α-methylstyrene, p-methylstyrene, p-chlorostyrene, methyl methacrylate, ethyl methacrylate or mixtures thereof and
B.1.2 1 to 50 parts by wt. of acrylonitrile, methacrylonitrile, methyl methacrylate, maleic acid, maleic anhydride, N-phenyl-maleimide or mixtures thereof,
in the presence of a graft base B.2.

5. Thermoplastic moulding compositions according to claim 1 to 4, wherein B.1.1 is chosen from styrene, α-methylstyrene and methyl methacrylate and B.1.2 is chosen from acrylonitrile, maleic anhydride and methyl methacrylate.

6. Thermoplastic moulding compositions according to claim 1 to 5, **characterized in that** component C is a (co)polymer prepared from
C.1 50 to 99 parts by wt. of vinylaromatics and/or vinylaromatics substituted on the nucleus and/or methacrylic acid (C₁-C₄)-alkyl esters and
C.2 1 to 50 parts by wt. of vinyl cyanides and/or (meth)acrylic acid (C₁-C₈)-alkyl esters and/or unsaturated carboxylic acids and/or derivatives of unsaturated carboxylic acids.

7. Thermoplastic moulding compositions according to claim 1 to 6, **characterized in that** C.1 is styrene and C.2 is acrylonitrile and B.1.1 is styrene and B.1.2 is acrylonitrile.

8. Thermoplastic moulding compositions according to claim 1 to 7, **characterized in that** component B.2 is a polybutadiene rubber.

9. Thermoplastic moulding compositions according to claim 1 to 8, **characterized in that** they comprise at least one addition from the group of stabilizers, pigments, mould release agents, flow auxiliaries, flameproofing agents and antistatics.

10. Use of the moulding compositions according to claim 1 to 9 for the production of shaped articles.

11. Shaped articles obtainable from moulding compositions according to one or more of the preceding claims.

## Revendications

1. Matières à mouler thermoplastiques consistant en
A. 30 à 70 parties en poids d'un polycarbonate thermoplastique à base de bisphénol A et
B. 10 à 30 parties en poids d'un polymère greffé de
B.1 20 à 60 % en poids d'un ou plusieurs monomères consistant en
B.1.1 50 à 99 parties en poids de composés vinylaromatiques et/ou de composés vinylaromatiques substitués dans les noyaux et/ou de méthacrylates d'alkyle en C₁-C₄ et
B.1.2 1 à 50 parties en poids de cyanures de vinyle, de méthacrylates d'alkyle en C₁-C₈, d'acide maléique, d'anhydride maléique, de N-vinylmaléimide ou de leurs mélanges,
sur
B.2 40 à 80 % en poids d'un support de greffage choisi dans le groupe des caoutchoucs EP(D)M, des caoutchoucs de polyuréthane, des caoutchoucs d'éthylène/acétate de vinyle et du caoutchouc de polybutadiène ayant des températures de transition du second ordre inférieures à 0°C,
C. 20 à 35 parties en poids d'un (co)polymère vinylaromatique thermoplastique, et éventuellement au moins un composant choisi dans le groupe consistant en les stabilisants, les pigments, les agents de démoulage, les produits auxiliaires fluidifiants, les agents ignifugeants, les agents anti-dégouttement et les agents antistatiques,
**caractérisées en que** le support de greffage B.2 a une dimension de particule moyenne (valeur d₅₀) de 0,20 à 0,35 µm et en ce que le rapport en poids composant B/composant C va de 2:1 à 1:4.

2. Matières à mouler thermoplastiques selon la revendication 1, **caractérisées en ce que** la température de transition du second ordre du composant B.2 est inférieure à -20°C et son diamètre de particule moyen d₅₀ va de 0,25 à 0,30 µm.

3. Matières à mouler thermoplastiques selon la revendication 1, **caractérisées en ce que** le rapport en poids composant B/composant C va de 1:1 à 1:3.

4. Matières à mouler thermoplastiques selon la revendication 1, **caractérisées en ce que** le composant B est un polymère modifié par un caoutchouc, préparé par copolymérisation greffée d'un mélange de monomères consistant en
B.1.1 50 à 99 parties en poids de styrène, d'α-méthylstyrène, de p-méthylstyrène, de p-chlorostyrène, de méthacrylate de méthyle, de méthacrylate d'éthyle ou de leurs mélanges et
B.1.2 1 à 50 parties en poids d'acrylonitrile, de méthacrylonitrile, de méthacrylate de méthyle, d'acide maléique, d'anhydride maléique, de N-phénylmaléimide ou de leurs mélanges,
en présence d'un support de greffage B.2.

5. Matières à mouler thermoplastiques selon les revendications 1 à 4, pour lesquelles le composant B.1.1 est choisi parmi le styrène, l'α-méthylstyrène et le méthacrylate de méthyle et le composant B.1.2 parmi l'acrylonitrile, l'anhydride maléique et le méthacrylate de méthyle.

6. Matières à mouler thermoplastiques selon les revendications 1 à 5, **caractérisées en ce que** le composant C est un (co)polymère préparé à partir de
C.1 50 à 99 parties en poids de composés vinylaromatiques et/ou de composés vinylaromatiques substitués dans les noyaux et/ou de méthacrylates d'alkyle en C₁-C₄ et
C.2 1 à 50 parties en poids de cyanures de vinyle et/ou de (méth)acrylates d'alkyle en C₁-C₈ et/ou d'acides carboxyliques insaturés et/ou de dérivés d'acides carboxyliques insaturés.

7. Matières à mouler thermoplastiques selon les revendications 1 à 6, **caractérisées en ce que** le composant C.1 est le styrène, le composant C.2 est l'acrylonitrile et le composant B.1.1 le styrène et le composant B.1.2 l'acrylonitrile.

8. Matières à mouler thermoplastiques selon les revendications 1 à 7, **caractérisées en ce que** le composant B.2 est un caoutchouc de polybutadiène.

9. Matières à mouler thermoplastiques selon les revendications 1 à 8, **caractérisées en ce qu'**elles contiennent au moins un additif du groupe des stabilisants, des pigments, des agents de démoulage, des produits auxiliaires fluidifiants, des agents ignifugeants et des agents antistatiques.

10. Utilisation des matières à mouler selon les revendications 1 à 9 pour la fabrication d'objets moulés.

11. Objets moulés obtenus à partir de matières à mouler selon une ou plusieurs des revendications qui précèdent.
